# EUROPEAN PATENT SPECIFICATION

(11) **EP 2 851 344 B1**
(45) Date of publication and mention of the grant of the patent: **20.07.2016**
(21) Application number: 14183937.3
(22) Date of filing: 08.09.2014
(51) Int. Cl.: C02F 1/24, C02F 1/74, B01D 53/50, C02F 101/20, C02F 103/08, C02F 103/18

(54) **METHOD AND SYSTEM FOR SEAWATER FOAM CONTROL**
VERFAHREN UND SYSTEM ZUR MEERWASSERSCHAUMKONTROLLE
PROCEDE ET SYSTEME DE CONTROLE DE LA MOUSSE D'EAU DE MER

(30) Priority: 18.09.2013 US 201314030239
(43) Date of publication of application: 25.03.2015
(73) Proprietor: ALSTOM Technology Ltd, 5400 Baden (CH)
(72) Inventor: Papsai, Pal, 352 63 Växjö (SE)
(74) Representative: General Electric Technology GmbH

(56) References cited:
- WO-A1-2005/074675
- WO-A1-2009/014053
- WO-A1-2013/042197
- JP-A- 2003 145 139
- US-A- 3 772 192

## Description

### Field of the Invention

The present invention relates to a method of removing foam comprising heavy metals generated during treatment of effluent seawater from a seawater based flue gas desulfurization system seawater aeration basin.

The present invention further relates to a system for removing foam comprising heavy metals generated during treatment of effluent seawater from a seawater based flue gas desulfurization system seawater aeration basin.

### Background of the Invention

Process gases containing sulfur dioxide, SO₂, are generated in many industrial processes. One such industrial process is combustion of a fuel such as coal, oil, peat, waste, or the like, in a combustion plant such as a power plant. In such a power plant, a hot process gas often referred to as a flue gas, is generated. The generated flue gas contains pollutants such as for example acid gases, such as for example sulfur dioxide, SO₂. It is necessary to remove as much of the generated acid gases as possible from the flue gas before the flue gas may be emitted into ambient air. Another example of an industrial process that generates a process gas containing pollutants is electrolytic production of aluminum from alumina. In that process, a process gas or flue gas containing sulfur dioxide, SO₂, is generated within venting hoods of electrolytic cells.

WO 2008/105212 discloses a boiler system comprising a boiler, a steam turbine system, and a seawater scrubber for flue gas desulfurization. The boiler generates, by combustion of a fuel, high-pressure steam utilized in the steam turbine system to generate electric power. Seawater is collected from the ocean, and is utilized as a cooling medium in a condenser of the steam turbine system. The seawater is then utilized in the seawater based flue gas desulfurization scrubber useful for absorbing sulfur dioxide, SO₂, from flue gas generated in the boiler. Sulfur dioxide, SO₂, is absorbed in seawater contacted in the seawater based flue gas desulfurization scrubber and forms sulfite and/or bisulfite ions. Effluent seawater from the seawater based flue gas desulfurization scrubber is forwarded to a seawater aeration basin for treatment. In the seawater aeration basin, air is bubbled through effluent seawater forwarded from the seawater based flue gas desulfurization scrubber for oxidation of sulfite and/or bisulfite ions therein to sulfate ions. The sulfite and/or bisulfite ions therein are so oxidized to sulfate ions by means of oxygen gas contained in the bubbled air. The resulting inert sulfate ions in the treated effluent seawater may then be release back to the ocean.

One problem with effluent seawater treatment in a seawater aeration basin is the generation of foam on the effluent seawater surface. At the present time, such generated foam on the surface of the effluent seawater is typically released back to the ocean. However, this generated foam carries a relatively high concentration of heavy metals unsuitable for release back to the ocean. A method and system for controlling seawater foam in effluent seawater aeration basins is needed to reduce or prevent the release of heavy metals back into the ocean. WO 2013/042197 A1 discloses a system and method according to the preamble of claims 1 and 3.

The documents WO2009/014053 and JP2003145139 disclose other examples of prior art apparatuses for removing foam floating on a liquid.

### Summary of the Invention

An object of the present disclosure is to provide a system for controlling seawater foam generation on the surface of effluent seawater, generated in the removal of sulfur dioxide from a flue gas by contacting the flue gas containing sulfur dioxide with seawater, and treated in seawater aeration basins. This stated object is achieved using a seawater aeration basin aeration fan. The high pressure side, i.e., the blower side, of the aeration fan is used to blow air to aerate effluent seawater in the seawater aeration basin. Adding ductwork to the low pressure side, i.e., the suction side of the aeration fan makes the aeration fan operable to suck generated foam from the surface of the effluent seawater undergoing treatment in the seawater aeration basin for foam storage, treatment and environmentally conservative disposal.

An advantage of this system is that the system achieves the stated objective with minimal added operational and/or capital expenses associate therewith. Using part of the aeration fan's low pressure energy results in minimal high pressure blower efficiency loss. Likewise, in most applications, foam control is achieved with system operation in a
non- continuous mode. Operating the system in a non-continuous mode likewise reduces any aeration fan efficiency losses attributed thereto, again reducing associated costs.

Another object of the present disclosure is to provide a method for controlling seawater foam generation on the surface of effluent seawater, generated in the removal of sulfur dioxide from a flue gas by contacting the flue gas containing sulfur dioxide with seawater, and treated in seawater aeration basins. This stated object is achieved using an effluent seawater seawater aeration basin aeration fan. The high pressure side, i.e., the blower side, of the aeration fan is used to blow air or aerate effluent seawater in the seawater aeration basin. Adding ductwork to the low pressure side, i.e., the suction side of the aeration fan makes the aeration fan operable to suck generated foam from the surface of the effluent seawater for storage, treatment and environmentally conservative disposal.

An advantage of this method is that the method achieves the stated objective with minimal added operational and/or capital expenses associate therewith. Using part of the aeration fan's low pressure energy results in minimal high pressure blower efficiency loss. Likewise, in most applications, foam control is achieved operating in accordance with the subject method in a non- continuous mode. Operating in a non-continuous mode likewise reduces any aeration fan efficiency losses attributed thereto, again reducing associated costs.

In summary, the subject disclosure provides a system and method for controlling foam comprising heavy metals generated on the surface of effluent seawater during aeration of the effluent seawater in a flue gas desulfurization system associated seawater aeration basin. As such, the subject foam control system comprises the features of claim 1. As the suctioned foam comprises heavy metals such as mercury, treatment of the suctioned foam in the foam collection tank comprises removing at least a portion of heavy metals therefrom. For this purpose, suctioned foam may be stored for a time in the foam collection tank prior to and/or after treatment thereof. Alternatively, the suctioned foam may be collected and optionally stored for a time in the foam collection tank prior to transport of the suctioned foam for treatment elsewhere in the power plant or offsite.

The subject method for controlling foam comprising heavy metals comprises the features of claim 3. As the suctioned foam comprises heavy metals such as mercury, treatment of the suctioned foam in the foam collection tank comprises removing at least a portion of heavy metals therefrom. For this purpose, suctioned foam may be stored for a time in the foam collection tank prior to and/or after treatment thereof. Alternatively, the suctioned foam may be collected and optionally stored for a time in the foam collection tank prior to transport of the suctioned foam for treatment elsewhere in the power plant or offsite.

Further objects and features of the present disclosure will be apparent from the following description and claims.

### Brief description of the Drawings

The invention will now be disclosed in more detail with reference to the appended drawings described below.
Figure 1 is a schematic side cross-section view of a power plant with apparatus according to the present disclosure.
Figure 2 is a schematic side cross-section view illustrating an enlarged seawater based flue gas desulfurization system seawater aeration basin according to FIGURE 1.

### Detailed Description

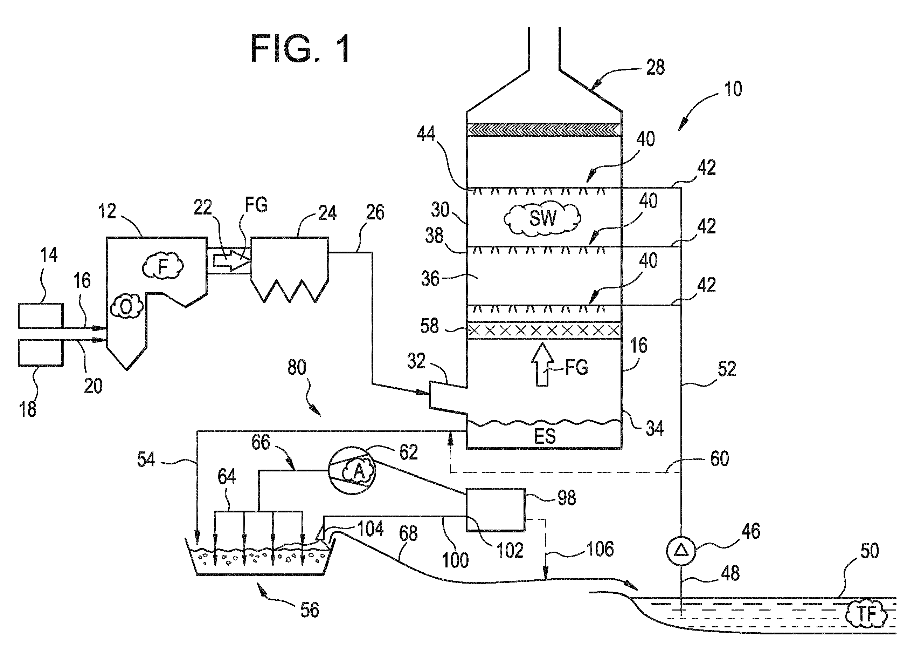

Figure 1 is a schematic side cross-section view illustrating a power plant 10. The power plant 10 comprises a boiler 12 to which a fuel F, such as coal, oil, or the like, is supplied from a fuel source 14 through a fluidly connected feeding pipe 16 to boiler 12 for combustion therein. Fuel F is combusted in boiler 12 in the presence of oxygen O, supplied to boiler 12 via a fluidly connected oxygen supply duct 20 from an oxygen source 18. The oxygen O supplied to boiler 12 may, for example, be supplied in the form of air, and/or in the form of a mixture of oxygen gas and recirculated power plant 10 flue gas FG. In such a case, boiler 12 would be what is commonly called an "oxy-fuel" boiler. The combustion of the fuel F generates a hot process gas in the form of a flue gas FG. Sulphur species contained in fuel F, upon combustion of the fuel F, form sulphur dioxide, SO₂. As such, power plant 10 flue gas FG includes as a portion thereof sulphur dioxide.

Produced flue gas FG flows from the boiler 12, via a fluidly connected duct 22, to a particulate collection device 24, in the form of a fabric filter or electrostatic precipitator. The particulate collection device 24, such as an electrostatic precipitator as described in US 4,502,872, serves to remove dust and/or ash particles entrained in the flue gas FG. Alternatively, a fabric filter such as that described in US 4,336,035, may be used for particulate collection of flue gas dust and/or ash from the flue gas FG. As an alternate embodiment, particulate collection device 24 may be arranged downstream of a seawater based flue gas desulfurization system 28. As still another embodiment, particulate collection device 24 may be eliminated from the system with particulate removal occurring solely in a seawater based flue gas desulfurization system 28.

According to the present embodiment illustrated in Figure 1, the flue gas FG from which most of the ash and/or dust particles have been removed, flows from the particulate collection device 24 via a fluidly connected duct 26 to a seawater based flue gas desulfurization system 28. The seawater based flue gas desulfurization system 28 comprises a wet scrubber tower or absorber 30. An inlet 32 is arranged at a lower portion 34 of the absorber 30. The duct 26 is fluidly connected to the inlet 32, such that flue gas FG flowing from particulate collection device 24 via duct 26 may enter interior 36 of absorber 30 via inlet 32.

After entering interior 36, flue gas FG flows vertically upward through absorber 30, as indicated by arrow FG. Central portion 38 of absorber 30 is equipped with a number of spray arrangements 40 arranged vertically one above each other. For purposes of simplicity in the embodiment illustrated in Figure 1, there are three such spray arrangements 40. Typically, there are 1 to 20 such spray arrangements 40 in an absorber 30. Each spray arrangement 40 comprises a supply pipe 42 and a number of nozzles 44 fluidly connected to the respective supply pipe 42. Seawater SW supplied via the respective supply pipes 42 to the nozzles 44 is atomized by means of the nozzles 44 contacting in interior 36 of absorber 30 flue gas FG flowing therethrough. As such, contact between the seawater SW and flue gas FG enables seawater SW absorption of sulphur dioxide, SO₂, from the flue gas FG within interior 36 of absorber 30.

A pump 46 is arranged for pumping seawater SW via fluidly connected suction pipe 48 from seawater supply or ocean 50, and forwarding the seawater SW via fluidly connected pressure pipe 52 to fluidly connected supply pipes 42.

In accordance with an alternative embodiment, the seawater SW supplied by pump 46 to supply pipes 42 may be seawater SW previously utilized as cooling water in steam turbine systems (not shown) associated with the boiler 12 prior to supply of such seawater SW to absorber 30.

In accordance with an alternative embodiment, the seawater based flue gas desulfurization system 28 may comprise one or more layers of a packing material 58 arranged in interior 36 of absorber 30. The packing material 58, which may be made from plastic, steel, wood, or another suitable material, enhances gas-liquid contact. With packing material 58, the nozzles 44 would merely distribute seawater SW over packing material 58, rather than atomizing the seawater SW. Examples of packing material 58 include Mellapak™ available from Sulzer Chemtech AG, Winterthur, CH, and Pall™ rings available from Raschig GmbH, Ludwigshafen, DE.

Seawater SW atomized by means of nozzles 44 in interior 36 of absorber 30 flows downwardly in absorber 30 and absorbs sulphur dioxide from the flue gas FG flowing vertically upwardly in interior 36 of absorber 30. Absorption of sulphur dioxide by the seawater SW in interior 36 forms effluent seawater ES collected in lower portion 34 of absorber 30. Effluent seawater ES collected in lower portion 34 of absorber 30 is forwarded via a fluidly connected effluent pipe 54 to seawater aeration basin 56.

Optionally if needed, fresh seawater SW may be added to the effluent seawater ES flowing through effluent pipe 54 to seawater aeration basin 56. To this end, an optional pipe 60 may be fluidly connected to pressure pipe 52 to forward a flow of fresh seawater SW to fluidly connected effluent pipe 54 forwarding effluent seawater ES to seawater aeration basin 56. Hence, an intermixing of fresh seawater SW and effluent seawater ES may occur in effluent pipe 54. As another optional alternative (not illustrated), the fresh seawater SW forwarded via pipe 60 may be forwarded directly to seawater aeration basin 56 mixing with the effluent seawater ES therein. As a still further option (not illustrated), residual waters and/or condensates generated in the boiler 22 or steam turbine systems (not shown) associated therewith could be mixed with the effluent seawater ES in seawater aeration basin 56.

The absorption of sulphur dioxide in interior 36 of absorber 30 is assumed to occur according to the following reaction:

SO₂ (g) + H₂O = > HSO₃⁻ (aq) + H⁺ (aq) [eq. 1.1 a]

The bisulphite ions, HSO₃⁻, may, depending on the pH value of the effluent seawater ES, dissociate further to form sulphite ions, SO₃²⁻, in accordance with the following equilibrium reaction:

HSO₃⁻ (aq) <=> SO₃²⁻ (aq) + H⁺ (aq) [eq. 1.1 b]

Hence, as an effect of the absorption of sulfur dioxide, the effluent seawater ES will have a lower pH value as an effect of the hydrogen ions, H⁺, generated in the absorption of sulfur dioxide, than that of the fresh seawater SW from the ocean 50, and will contain bisulphite and/or sulphite ions, HSO₃⁻ and SO₃²⁻, respectively. Bisulphite and/or sulphite ions are oxygen demanding substances, and the release thereof to the ocean 50 is restricted.

In the seawater aeration basin 56, the bisulphite and/or sulphite ions, HSO₃⁻ and/or SO₃²⁻, are oxidized by reacting the same with oxygen A, in accordance with the following reactions:

HSO₃⁻ + H⁺ + ½ O₂ (g) = > SO₄²⁻ + 2H⁺ [eq. 1.2a]

SO₃²⁻ + 2H⁺ + ½ O₂(g) = > SO₄²⁻ + 2H⁺ [eq. 1.2b]

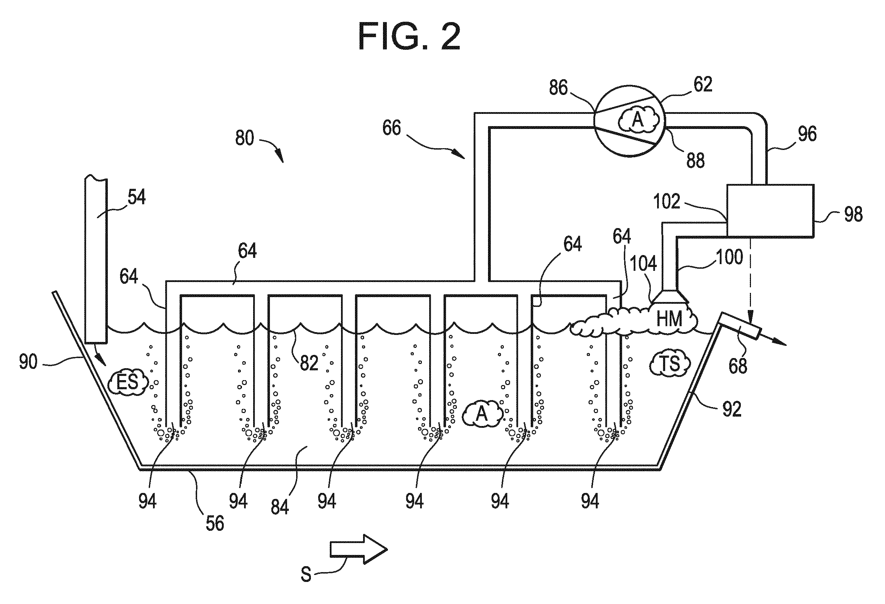

The seawater aeration basin 56 includes an aeration fan 62 operative for blowing, via fluidly connected ductwork 64, an oxygen containing gas, such as air, into the effluent seawater ES therein. The aeration fan 62 and the ductwork 64 together form an oxygen supply system 66 for supplying oxygen A to the effluent seawater ES in the seawater aeration basin 56. A more detailed description of the seawater aeration basin 56 is provided hereinafter with reference to Figure 2.

Figure 2 illustrates the seawater aeration basin 56 in more detail. Effluent seawater ES is supplied to the seawater aeration basin 56 portion of seawater treatment system 80 via fluidly connected effluent pipe 54 at a first end 90, being an inlet end of seawater aeration basin 56. The effluent seawater ES flows, generally horizontally as indicated by arrow S, from the first end 90 to a second end 92, being an outlet end of seawater aeration basin 56. As effluent seawater ES flows from the first end 90 to second end 92 a foam HM is generated on a surface 82 of effluent seawater ES near second end 92. Foam HM carries a relatively high concentration of heavy metals such as mercury and the like. At the second end 92, treated effluent seawater TS overflows from seawater aeration basin 56 via fluidly connected overflow pipe 68.

Aeration system 80 further includes the oxygen supply system 66 with aeration fan 62 and ductwork 64. The ductwork 64 comprises a number of outlets 94 within interior 84 of seawater aeration basin 56. Aeration fan 62 blows oxygen A through ductwork 64 for release from outlets 94 below effluent seawater ES surface 82 in seawater aeration basin 56. The ductwork 64 extends along the seawater aeration basin 56, between the first end 90 and the second end 92 thereof. Oxygen A blown by high pressure side 86 of aeration fan 62 and released from outlets 94 mixes with the effluent seawater ES in seawater aeration basin 56. Oxygen A is dispersed in and mixed with effluent seawater ES to oxidize bisulphite and/or sulphite ions present therein to form inert sulfates in treated seawater TS prior to environmental release of the treated seawater TS via overflow pipe 68 into ocean 50.

As noted above, effluent seawater ES flows, generally horizontally as indicated by arrow S, from the first end 90 to the second end 92, being an outlet end of seawater aeration basin 56. As effluent seawater ES flows from the first end 90 to second end 92 foam HM is generated by turbulence and aeration on surface 82 of effluent seawater ES. As a result of effluent seawater ES flowing from the first end 90 to second end 92 foam HM builds or collects near second end 92. Foam HM carries a relatively high concentration of heavy metals such as mercury and the like.

To prevent foam HM from flowing from seawater aeration basin 56 via overflow pipe 68 into ocean 50, low pressure side 88, i.e., the suction side, is fluidly connected via suction duct 96 to a foam collection tank 98. Also fluidly connected to foam collection tank 98 is foam duct 100. Foam duct 100 fluidly connects to foam collection tank 98 via outlet 102. Opposite outlet 102 of foam duct 100 is free open end 104. Free open end 104 of foam duct 100 is operable to remove via suction from aeration fan 62 foam HM from surface 82. Foam HM so removed from surface 82 collects in foam collection tank 98 for storage and treatment prior to disposal. Collection of foam HM using aeration fan 62 may be conducted on a continuous, scheduled periodic, detector initiated "as-needed" periodic or like non-continuous basis.

As an option, foam HM collected in foam collection tank 98 may be treated to remove at least a portion of the relatively high concentration of foam heavy metals prior to release of the treated foam TF. As such, treated foam TF may be released from the foam collection tank 98via a fluidly connected treated foam pipe 106 fluidly connected to overflow pipe 68 for return of treated foam TF to the ocean 50.

Alternatively, foam HM collected in foam collection tank 98 may be transported to additional power plant 10 equipment (not shown) for removal of at least a portion of the relatively high concentration of foam heavy metals prior to release of the treated foam TF or use of the treated foam TF elsewhere in the power plant 10 or offsite.

While the present invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

It will be appreciated that numerous modifications of the embodiments described above are possible within the scope of the appended claims.

## Claims

1. A sea water treatment system (80) comprising
a seawater aeration basin (56) for aeration of effluent seawater (ES);
an oxygen supply system with an aeration fan (62) and a ductwork (64), the ductwork comprising a number of outlets (94) within an interior (84) of the seawater aearation basin (56), wherein a high pressure side (86) of the aeration fan (62) is connected to the ductwork (64) such that the aeration fan (62) is operable to blow an oxygen containing gas into the effluent seawater (ES) in the seawater aeration basin (56),
and a foam collection tank (98) for collection of foam suctioned from a surface (82) of the effluent seawater (ES) in the aeration basin (56);
**characterized in that**
a low pressure side (88) of the aeration fan (62) is fluidly connected to the foam collection tank (98) via a suction duct (96), wherein the foam collection tank (98) is fluidly connected to a duct (100) comprising a free open end (104) operable to remove foam from of the surface (82) of the effluent seawater (ES) such that the aeration fan (62) is operable to suction foam from the surface (82) of effluent seawater (ES) in the seawater aeration basin (56).

2. The system according to claim 1, wherein the aeration fan (62) is configured such that suction of foam is conducted on a continuous, scheduled periodic, detector initiated "as-needed" periodic or other non-continuous basis.

3. A method for removing foam comprising heavy metals generated during the treatment of effluent seawater from a seawater based flue gas desulfurization system seawater aeration basin comprising the steps of
blowing an oxygen containing gas into effluent seawater (ES) in a seawater aeration basin (56) with a high pressure side (86) of an aeration fan (62);
collecting foam suctioned from a surface of the effluent seawater (ES) in the seawater aeration basin (56) in a foam collection tank (98); **characterized by**
sucking foam from the surface (82) of the effluent seawater (ES) in the seawater aeration basin (56) into the foam collection tank (98) with a low pressure side (88) of the aeration fan (62).

4. The method according to claim 3, wherein the suctioned foam comprises heavy metals.

5. The method according to claim 3, wherein the suctioned foam comprises mercury.

6. The method according to claim 3, wherein the suctioned foam comprises heavy metals and wherein at least a portion of the heavy metals is removed from the suctioned foam.

7. The method according to claim 3, wherein the suctioned foam comprises heavy metals and the suctioned foam is collected in a foam collection tank (98) for treatment therein or for storage prior to transport for treatment elsewhere.

## Patentansprüche

1. Meerwasserbehandlungssystem (80) umfassend
ein Meerwasserbelüftungsbecken (56) zum Belüften von Abfluss-Meerwasser (ES);
ein Sauerstoffzufuhrsystem mit einem Belüftungsgebläse (62) und einem Leitungssystem (64), wobei das Leitungssystem mehrere Auslässe (94) in einem Innenraum (84) des Meerwasserbelüftungsbeckens (56) umfasst, wobei eine Hochdruckseite (86) des Belüftungsgebläses (62) mit dem Leitungssystem (64) verbunden ist, so dass das Belüftungsgebläse (62) funktionsfähig ist, ein sauerstoffhaltiges Gas in das Abfluss-Meerwasser (ES) in dem Meerwasserbelüftungsbecken (56) zu blasen,
und einen Schaumsammeltank (98) zum Sammeln von von einer Oberfläche (82) des Abfluss-Meerwassers (ES) in dem Meerwasserbelüftungsbecken (56) abgesaugtem Schaum;
**dadurch gekennzeichnet, dass**
eine Niederdruckseite (88) des Belüftungsgebläses (62) über eine Saugleitung (96) mit dem Schaumsammeltank (98) in Fluidverbindung steht, wobei der Schaumsammeltank (98) mit einer Leitung (100) in Fluidverbindung steht, die ein freies, offenes Ende (104) umfasst, das funktionsfähig ist, Schaum von der Oberfläche (82) des Abfluss-Meerwassers (ES) zu entfernen, so dass das Belüftungsgebläse (62) funktionsfähig ist, Schaum von der Oberfläche (82) von Abfluss-Meerwasser (ES) in dem Meerwasserbelüftungsbecken (56) abzusaugen.

2. System gemäß Anspruch 1, wobei das Belüftungsgebläse (62) so gestaltet ist, dass das Absaugen von Schaum auf einer kontinuierlichen, planmäßig periodischen, von einem Detektor ausgelösten "bedarfsmäßig" periodischen oder anderen nichtkontinuierlichen Grundlage durchgeführt wird.

3. Verfahren zum Entfernen von Schaum, der Schwermetalle enthält, der bei der Behandlung von Abfluss-Meerwasser in einem MeerwasserBelüftungsbecken eines Rauchgas-Entschwefelungssystems auf Meerwasserbasis entsteht, umfassend die Schritte:
Blasen eines sauerstoffhaltigen Gases in Abfluss-Meerwasser (ES) in einem MeerwasserBelüftungsbecken (56) mit einer Hochdruckseite (86) eines Belüftungsgebläses (62);
Sammeln von von einer Oberfläche des Abfluss-Meerwassers (ES) in dem Meerwasserbelüftungsbecken (56) abgesaugtem Schaum in einem Schaumsammeltank (98); **gekennzeichnet durch**
Absaugen von Schaum von der Oberfläche (82) des Abfluss-Meerwassers (ES) in dem Meerwasserbelüftungsbecken (56) in den Schaumsammeltank (98) mit einer Niederdruckseite (88) des Belüftungsgebläses (62).

4. Verfahren gemäß Anspruch 3, wobei der abgesaugte Schaum Schwermetalle umfasst.

5. Verfahren gemäß Anspruch 3, wobei der abgesaugte Schaum Quecksilber umfasst.

6. Verfahren gemäß Anspruch 3, wobei der abgesaugte Schaum Schwermetalle umfasst und wobei wenigstens ein Teil der Schwermetalle aus dem abgesaugten Schaum entfernt wird.

7. Verfahren gemäß Anspruch 3, wobei der abgesaugte Schaum Schwermetalle umfasst und der abgesaugte Schaum in einem Schaumsammeltank (98) für die Behandlung darin oder für die Verwahrung vor dem Transport zur Behandlung andernorts gesammelt wird.

## Revendications

1. Système de traitement d'eau de mer (80) comprenant
un bassin d'aération d'eau de mer (56) pour l'aération d'eau de mer effluente (ES) ;
un système d'apport d'oxygène comprenant un ventilateur d'aération (62) et un réseau de conduites (64), le réseau de conduites comprenant un certain nombre de sorties (94) dans une partie intérieure (84) du bassin d'aération d'eau de mer (56), un côté haute pression (86) du ventilateur d'aération (62) étant raccordé au réseau de conduites (64) de façon telle que le ventilateur d'aération (62) peut être amené à fonctionner pour souffler un gaz contenant de l'oxygène dans l'eau de mer effluente (ES) présente dans le bassin d'aération d'eau de mer (56),
et un bac de recueil de mousse (98) pour le recueil de mousse aspirée à partir d'une surface (82) de l'eau de mer effluente (ES) présente dans le bassin d'aération (56) ;
**caractérisé en ce que**
un côté basse pression (88) du ventilateur d'aération (62) est en communication fluidique avec le bac de recueil de mousse (98) par l'intermédiaire d'une conduite d'aspiration (96), le bac de recueil de mousse (98) étant en communication fluidique avec une conduite (100) comprenant une extrémité ouverte libre (104) pouvant être amenée à fonctionner pour enlever la mousse de la surface (82) de l'eau de mer effluente (ES) de façon telle que le ventilateur d'aération (62) peut être amené à fonctionner pour aspirer de la mousse à partir de la surface (82) de l'eau de mer effluente (ES) présente dans le bassin d'aération d'eau de mer (56).

2. Système selon la revendication 1, dans lequel le ventilateur d'aération (62) est conçu de façon telle que l'aspiration de mousse est effectuée sur une base continue, périodique programmée, périodique déclenchée par détecteur « selon les besoins » ou une autre base non continue.

3. Procédé pour l'élimination de mousse comprenant des métaux lourds produite pendant le traitement d'eau de mer effluente provenant d'un bassin d'aération d'eau de mer de système de désulfuration de gaz de carneau à base d'eau de mer, comprenant les étapes consistant à
souffler un gaz contenant de l'oxygène dans de l'eau de mer effluente (ES) présente dans un bassin d'aération d'eau de mer (56) avec un côté haute pression (86) d'un ventilateur d'aération (62) ;
recueillir de la mousse aspirée à partir d'une surface de l'eau de mer effluente (ES) présente dans le bassin d'aération d'eau de mer (56) dans un bac de recueil de mousse (98) ; **caractérisé par**
l'aspiration de mousse à partir de la surface (82) de l'eau de mer effluente (ES) présente dans le bassin d'aération d'eau de mer (56) dans le bac de recueil de mousse (98) avec un côté basse pression (88) du ventilateur d'aération (62).

4. Procédé selon la revendication 3, dans lequel la mousse aspirée comprend des métaux lourds.

5. Procédé selon la revendication 3, dans lequel la mousse aspirée comprend du mercure.

6. Procédé selon la revendication 3, dans lequel la mousse aspirée comprend des métaux lourds et dans lequel au moins une partie des métaux lourds est enlevée de la mousse aspirée.

7. Procédé selon la revendication 3, dans lequel la mousse aspirée comprend des métaux lourds et la mousse aspirée est recueillie dans un bac de recueil de mousse (98) pour traitement dans celui-ci ou pour stockage avant transport pour traitement ailleurs.
